# FASCICULE DE BREVET EUROPEEN

(11) **EP 2 578 372 B1**
(45) Date de publication et mention de la délivrance du brevet: **19.03.2014**
(21) Numéro de dépôt: 11183804.1
(22) Date de dépôt: 04.10.2011
(51) Int. Cl.: B29C 45/16, G04B 39/00, G04B 45/00

(54) **Procédé de fonctionnalisation optique d'un composant transparent d'horlogerie**
Verfahren zur optischen Funktionalisierung einer durchsichtigen Uhrenkomponente
Method for optical functionalization of a transparent clock component

(43) Date de publication de la demande: 10.04.2013
(73) Titulaire: ETA SA Manufacture Horlogère Suisse, 2540 Grenchen (CH)
(72) Inventeur: Poffet, Christian, 1735 Giffers (CH); Gaechter, Philipp, 4452 Itingen (CH)
(74) Mandataire: Giraud, Eric

(56) Documents cités:
- EP-A1- 1 666 225
- DE-A1- 2 318 395
- DE-A1- 19 540 333
- FR-A1- 2 360 113
- JP-A- 11 223 680
- JP-A- 58 080 587
- JP-A- 61 239 189
- US-A- 2 663 910
- US-A1- 2010 310 839
- US-B1- 6 342 019

## Description

### Domaine de l'invention

L'invention concerne un procédé de formage d'un composant d'horlogerie transparent, monobloc comportant une surface supérieure et une surface inférieure reliées par un bord, ledit bord s'étendant selon l'épaisseur dudit composant.

### Arrière-plan de l'invention

La substitution de composants transparents d'origine minérale par des composants transparents en matière plastique moulés permet de disposer d'une alternative fonctionnelle à bas coût de production, et toute indépendance de certaines sources d'approvisionnement de matériaux transparents de haut de gamme.

Toutefois, les pièces transparentes moulées sont, d'une part relativement épaisses car il est délicat de mouler des pièces très fines dans une qualité convenable et reproductible. D'autre part, la résistance à l'usure, et particulièrement aux rayures, de ces composants en plastique connus, est très médiocre. Leur utilisation pour des composants d'habillage d'une pièce d'horlogerie, carrure, lunette, ou glace, est donc limitée dans le temps.

Cette faible résistance à l'usure empêche, encore, de réaliser des composants avec des angles vifs, qui s'émousseraient trop vite dans le temps au contact de l'utilisateur, de ses vêtements, et des objets de son cadre de vie habituel.

Il est utile, en horlogerie, de disposer de composants de haute dureté superficielle, en particulier pour ces composants d'habillage externe, soumis aux contraintes de l'environnement et de l'utilisateur. De tels composants doivent, encore, posséder certaines propriétés physiques d'élasticité, de rigidité ou au contraire de souplesse, ou encore des propriétés optiques particulières, pour la mise en valeur de certains affichages ou composants, ou au contraire pour cacher certains organes de la pièce d'horlogerie.

Le document EP 1666 225 au nom de BAYER MATERIAL SCIENCE CLC décrit un procédé de fabrication d'un composant plastique moulé dans une première chambre, et revêtu dans une deuxième cavité du moule, dans laquelle le matériau de couverture est comprimé.

Le document JP 58 080587 A au nom de SUWA SEIKOSHA décrit l'amélioration de boîtes de montres, en terme de résistance et de précision dimensionnelle, par l'utilisation de fibre de verre traitée avec du silane acrylique et mélangée avec une résine synthétique durcissant aux UV, telle que résine spirane, avec un agent amorceur de la photo-polymérisation tel que benzophénone. Ces boîtes sont moulées dans des moules en caoutchouc synthétique élastique ou silicone, qui sont fixés à des plaques de verre puis irradiés par des UV pendant 30 secondes à 30 minutes selon l'intensité du rayonnement.

On connaît encore les documents : JP 11 223 680 A SEIKO EPSON, FR 2 360 113 A1 MULTIBREV, US 2 663 910 A DANIELSON ELMER, DE 195 40 333 A1 FRANZ WEIGELT, US 6 342 019 B1 BOEHM HERBERT, US 2010/310839 A1 REY CEA, DE 23 18 395 A1 UEBELHOFER, relatifs à des problématiques similaires.

### Résumé de l'invention

L'invention se propose de mettre en oeuvre un procédé permettant l'obtention économique, avec une haute précision dimensionnelle, de composants d'horlogerie transparents et monobloc.

Tout particulièrement, l'invention a pour but de réaliser un tel composant, avec une dureté superficielle supérieure à celle des composants d'horlogerie usuellement obtenus par moulage de matériaux plastiques.

Un but particulier est encore de réaliser des composants externes à une pièce d'horlogerie, comportant des angles vifs, par exemple avec une taille à facettes ou une taille diamant, et résistants à l'usure.

A cet effet, l'invention concerne un procédé de fabrication selon la revendication 1.

Selon une caractéristique de l'invention, on choisit un polymétacrylate comme dit premier matériau.

Selon une caractéristique de l'invention, on soumet ledit second matériau injecté dans ladite cavité, pendant sa polymérisation, à une température comprise entre 100°C et 120°C, pendant 10 à 20 secondes.

Selon une caractéristique de l'invention, après injection dudit second matériau de moulage, on insole ledit corps intermédiaire ou ledit composant par un rayonnement ultra-violet, ou bien au travers dudit moule réalisé sous forme d'un moule transparent aux rayons ultra-violets, ou bien après extraction dudit corps intermédiaire ou dudit composant polymérisé de ladite cavité, pour obtenir une dureté améliorée dudit corps intermédiaire ou dudit composant rigide.

Selon une caractéristique de l'invention, on choisit ledit premier matériau de moulage transparent aux rayons ultra-violets, et on insole ledit corps intermédiaire ou ledit composant par un rayonnement ultra-violet au travers dudit corps de base, en plus de ladite insolation au travers dudit moule transparent, pour obtenir une dureté améliorée dudit corps intermédiaire ou dudit composant rigide.

Selon une caractéristique de l'invention, on applique une force de serrage sur ledit moule et sur ledit corps de base pendant l'injection dudit second matériau de moulage dans ladite cavité, et pendant la polymérisation dudit second matériau de moulage pour la réalisation dudit composant.

Selon une caractéristique de l'invention, on effectue l'injection dudit premier matériau de moulage à une pression supérieure à 100 MPa.

Selon une caractéristique de l'invention, on réalise une structuration de fonctionnalisation mécanique de ladite surface intermédiaire par la réalisation de tenons ou/et mortaises sensiblement parallèles entre eux et sensiblement perpendiculaires à un plan tangent à ladite surface inférieure ou à ladite surface intermédiaire au niveau de l'intersection entre le prolongement desdits tenons ou mortaises avec la surface concernée.

Selon une caractéristique de l'invention, on réalise une structuration de fonctionnalisation mécanique de ladite surface intermédiaire par la réalisation de sections plus faibles dudit corps de base dans ses zones de forte courbure que dans ses zones de moindre courbure.

Selon une caractéristique de l'invention, on réalise une structuration de fonctionnalisation mécanique de ladite surface intermédiaire par la réalisation de zones d'épaisseur variable dudit composant dans ses zones de moindre courbure.

Selon une caractéristique de l'invention, on structure au moins une couche particulière parmi celle ou celles recouvrant ledit corps de base, et au moins une dite surface intermédiaire, de façon à cacher ou à révéler ladite couche particulière, selon l'angle d'incidence optique d'observation dudit composant par un utilisateur.

Ce procédé peut être appliqué à un composant d'horlogerie choisi parmi : glace, couronne, carrure, platine, pont, roue, roue d'échappement, ancre, logement de palier, amortisseur anti-choc.

Un mouvement d'horlogerie peut comporter au moins un composant réalisé selon ce procédé.

Une pièce d'horlogerie peut comporter au moins un composant réalisé selon ce procédé

### Description sommaire des dessins

D'autres caractéristiques et avantages de l'invention apparaîtront mieux à la lecture de la description détaillée qui va suivre, en référence aux dessins annexés, où :
- la figure 1 représente, de façon schématisée sous forme d'un organigramme, la succession des opérations de mise en oeuvre du procédé ;
- la figure 2 représente, de façon schématisée et en coupe selon son épaisseur, un composant obtenu selon le procédé, dans une réalisation où une couche est déposée sur un corps de base ;
- la figure 3 représente, de façon schématisée et en coupe selon son épaisseur et sensiblement perpendiculairement à ses surfaces principales, le composant de la figure 2 avec un de ses outillages de réalisation dans leur configuration pendant le formage du composant ;
- la figure 4 représente, de façon similaire à la figure 2, une variante où le composant comporte deux couches en superposition d'un corps de base ;
- la figure 5 représente, de façon similaire à la figure 2, une autre variante où une surface intermédiaire entre le corps de base et une couche de recouvrement est sensiblement lisse, et où l'épaisseur de cette couche de recouvrement est sensiblement constante ;
- la figure 6 représente, de façon similaire à la figure 2, une autre variante où une surface intermédiaire entre le corps de base et une couche de recouvrement est striée ;
- la figure 7 représente, de façon similaire à la figure 2, une autre variante où une surface intermédiaire entre le corps de base et une couche de recouvrement comporte une alternance de tenons et de mortaises ;
- la figure 8 représente, de façon similaire à la figure 2, une autre variante où une surface intermédiaire entre le corps de base et une couche de recouvrement est localement ondulée, et où la couche de recouvrement est d'épaisseur variable ;
- la figure 9 représente une coupe au voisinage de la surface supérieure d'un composant réalisé selon une variante particulière de l'invention ;
- la figure 10 représente, sous la forme d'un schéma-blocs, une pièce d'horlogerie comportant au moins un composant réalisé selon l'invention.

### Description détaillée des modes de réalisation préférés

L'invention se propose de mettre en oeuvre un procédé permettant l'obtention économique, avec une haute précision dimensionnelle, de composants 1 d'horlogerie transparents et monobloc.

Tout particulièrement, l'invention a pour but de réaliser un tel composant 1, avec une dureté superficielle supérieure à celle des composants d'horlogerie usuellement obtenus par moulage de matériaux plastiques.

Le procédé consiste à recouvrir un corps de base 16, de préférence transparent, d'une ou plusieurs couches 20, 20A,..., présentant une bonne affinité avec ce corps de base 16 pour celles directement en contact avec ce corps de base, et présentant une bonne affinité entre elles pour celles qui sont juxtaposées. Le choix d'un premier matériau 5 adéquat pour le corps de base 16, et d'un second matériau 6 adéquat pour chacune des couches 20 recouvrant ce corps de base ou se recouvrant entre elles, totalement ou partiellement, est donc d'une grande importance.

De préférence, on choisit un premier matériau 5 transparent optiquement parmi le PMMA ou polymétacrylate, ou le « Cover Form ® » de « Evonik Rôhm ® » ou le « Nanocryl® » de « Hanse Chemie® » ou un polymétacrylate ou un polyacryl.

Selon le procédé, on choisit au moins un second matériau de moulage 6 polymérisable pour la réalisation dudit composant 1, parmi le « Cover Form ® » de « Evonik Rôhm ® » ou le « Nanocryl® » de « Hanse Chemie® » ou un polymétacrylate ou un polyacryl.

L'invention concerne la mise au point d'un procédé de fabrication et de fonctionnalisation optique d'un composant d'horlogerie 1 transparent, comportant des surfaces supérieure 2 et inférieure 3, par lequel, dans une variante préférée de mise en oeuvre :
- on forme un corps de base 16 en polymétacrylate, comportant ladite surface inférieure 3 et une surface intermédiaire 7 fonctionnalisée mécaniquement ou/et optiquement ;
- on le recouvre d'au moins une couche 20 réalisée par injection d'un matériau 5 transparent et polymérisable «Cover Form ® », dans une cavité 14 entre un moule 9 et ledit corps de base 16 ou un corps intermédiaire 6A délimité par une surface intermédiaire 7A complémentaire d'une surface de contact 10 d'un moule 9 précédent, le dernier moule 9 étant le négatif de ladite surface supérieure 2 ;
- on y polymérise le matériau 5 pour l'obtention d'un composant 1 rigide résultant de l'agglomération du corps de base 16 et de la ou des couches 20 successives;
- on détache le composant 1 des plaques et du moule 9 réalisé souple, par déformation de ce dernier.

On améliore la dureté par une insolation du composant 1 à des rayons ultra-violets.

De façon plus générique, le procédé de fabrication et de fonctionnalisation optique d'un composant d'horlogerie 1 transparent optiquement et comportant une surface supérieure 2 et une surface inférieure 3 reliées par un bord 4, le bord 4 s'étendant selon l'épaisseur du composant 1, comporte les étapes suivantes :
- AA : on choisit un premier matériau 5 transparent optiquement, pour la réalisation d'un corps de base 16, parmi le PMMA ou polymétacrylate, le « Cover Form ® » de « Evonik Röhm ®» » ou le « Nanocryl® » de « Hanse Chemie® » ou un polyacryl;
- BB : on choisit au moins un second matériau de moulage 6 polymérisable pour la réalisation d'une ou plusieurs couches 20 du composant 1, parmi le « Cover Form ® » de « Evonik Rôhm ® » ou le « Nanocryl® » de « Hanse Chemie® » ou un polymétacrylate ou un polyacryl;
- CC : on effectue un formage d'un corps de base 16 du composant 1, dans le premier matériau 5, le corps de base 16 étant de volume inférieur à celui du composant 1 et s'étendant entre la surface inférieure 3 et une surface intermédiaire 7 reliées par un bord intermédiaire 8, et on effectue une structuration de fonctionnalisation mécanique ou/et optique de la surface intermédiaire 7, soit lors du formage du corps de base 16 dans un moule adapté, soit en reprise d'usinage après le formage ;
- DD : on définit un nombre de couches 20 à superposer au corps de base 16 pour obtenir un composant 1 ;
- EE : on réalise, pour chaque couche, un moule 9 dont une surface de contact 10 est, ou bien le négatif de la surface supérieure 2, ou bien une surface délimitant un solide de volume inférieur au volume final du composant 1, le moule 9 comportant un rebord 11 comportant une surface d'appui 12 agencée pour coopérer de façon complémentaire en appui sur la surface intermédiaire 7 ou sur le bord intermédiaire 8, et, en cas de pluralité de moules 9, ceux-ci définissent chacun le volume extérieur d'un corps intermédiaire 6A délimité par une surface intermédiaire 7A complémentaire de la surface de contact 10 du moule 9 concerné, les volumes intermédiaires 6A étant inclus les uns dans les autres;
- FF : on positionne, à une distance de la surface intermédiaire 7 correspondant à l'épaisseur requise pour le composant 1, et exactement positionné par rapport à la surface intermédiaire 7, le moule 9 avec sa surface de contact 10 faisant face à la surface intermédiaire 7 du corps de base 16, avec la surface d'appui 12 en contact étanche avec la surface intermédiaire 7 ou avec le bord intermédiaire 8;
- GG : on injecte le second matériau de moulage 6, de façon à remplir entièrement du second matériau de moulage 6 une cavité 14 délimitée par la surface de contact 10 du moule 9, la surface intermédiaire 7 du corps de base 16, et le rebord 11 en appui étanche par sa surface d'appui 12 sur la surface intermédiaire 7 ou sur le bord intermédiaire 8;
- HH : on laisse se polymériser le second matériau 6 injecté dans la cavité 14 jusqu'à sa polymérisation, pour obtenir, selon le cas, ou bien un composant 1, ou bien un corps intermédiaire 6A délimité par une surface intermédiaire 7A complémentaire de la surface de contact 10 du moule transparent 9;
- JJ : on éloigne le moule 9 ;
- on renouvelle l'opération avec à chaque fois un nouveau moule 9 dont le volume intérieur est supérieur au volume du corps intermédiaire 6A obtenu par le moule précédent, jusqu'à obtention du composant 1 dans son volume final.

On choisit de préférence le matériau « Cover Forum ® » de « Evonik Rôhm ® » comme second matériau de moulage 6 polymérisable pour la réalisation de la couche 20 ou des couches 20 du composant 1.

Et on choisit de préférence un polymétacrylate comme premier matériau 5.

En effet, le matériau « Cover Form ® » possède, une fois polymérisé, et en particulier après un traitement de chauffe KK à une température inférieure à 130°C, voisine de 110°C, et plus encore après un traitement d'insolation LL aux rayons ultra-violets, dits ci-après UV, effectué après une telle chauffe, une excellente dureté superficielle, qui le rend apte à apporter une excellente résistance aux rayures, aux chocs, et à l'abrasion. L'insolation LL aux rayons ultra-violets a pour effet d'augmenter la durée superficielle du composant 1 obtenu, en effectuant la réticulation définitive du système.

De plus, lors de sa mise en oeuvre, ce produit, qui est le résultat d'un mélange de phases liquides, base et activateur, possède, dans sa phase liquide une très bonne mouillabilité qui lui permet d'occuper toutes les porosités, fentes, et de façon générale tous les creux et reliefs superficiels d'un corps de base avec lequel il est mis en contact. Son emploi comme couche 20 de couverture permet donc de cacher tous les défauts du composant ou sous-composant, corps de base 16 ou corps intermédiaire 6A sur lequel on l'applique.

On réalise de préférence chaque moule 9 souple dans un matériau « PDMS® », qui permet une très grande précision dimensionnelle, et un état de surface parfait.

De façon préférée, pour obtenir une dureté améliorée du corps intermédiaire 6A ou du composant 1 rigide, on soumet le second matériau 6 injecté dans la cavité 14, pendant sa polymérisation, à une température inférieure à 130°C, de préférence comprise entre 100°C et 120°C, pendant 10 à 20 secondes. Cette chauffe est de préférence effectuée alors que le composant ou le sous-composant est encore dans la cavité 14.

Dans une variante avantageuse, on réalise un refroidissement à température ambiante au moins aussi brusque que la chauffe, pendant une durée inférieure à 20 secondes.

Pour obtenir une dureté améliorée du corps intermédiaire 6A ou du composant 1 rigide, après injection du second matériau de moulage 6, on insole le corps intermédiaire 6A ou le composant 1 par un rayonnement ultra-violet, ou bien au travers du moule 9 réalisé sous forme d'un moule transparent aux rayons ultra-violets, ou bien après extraction du corps intermédiaire 6A ou du composant 1 polymérisé de la cavité 14.

On choisit avantageusement le premier matériau de moulage 5 transparent aux rayons ultra-violets, ce qui permet alors d'insoler le corps intermédiaire 6A ou le composant 1 par un rayonnement ultra-violet au travers du corps de base 16, en plus de l'insolation au travers du moule transparent 9, pour obtenir une dureté améliorée du corps intermédiaire 6A ou du composant 1 rigide.

On applique de préférence une force de serrage sur le moule 9 et sur le corps de base 16 pendant l'injection du second matériau de moulage 6 dans la cavité 14, et pendant la polymérisation du second matériau de moulage 6 pour la réalisation du composant 1.

On effectue de préférence l'injection du premier matériau de moulage 5 à haute pression, c'est-à-dire avec une pression supérieure à 100 MPa, tout en restant inférieure à 150 MPa.

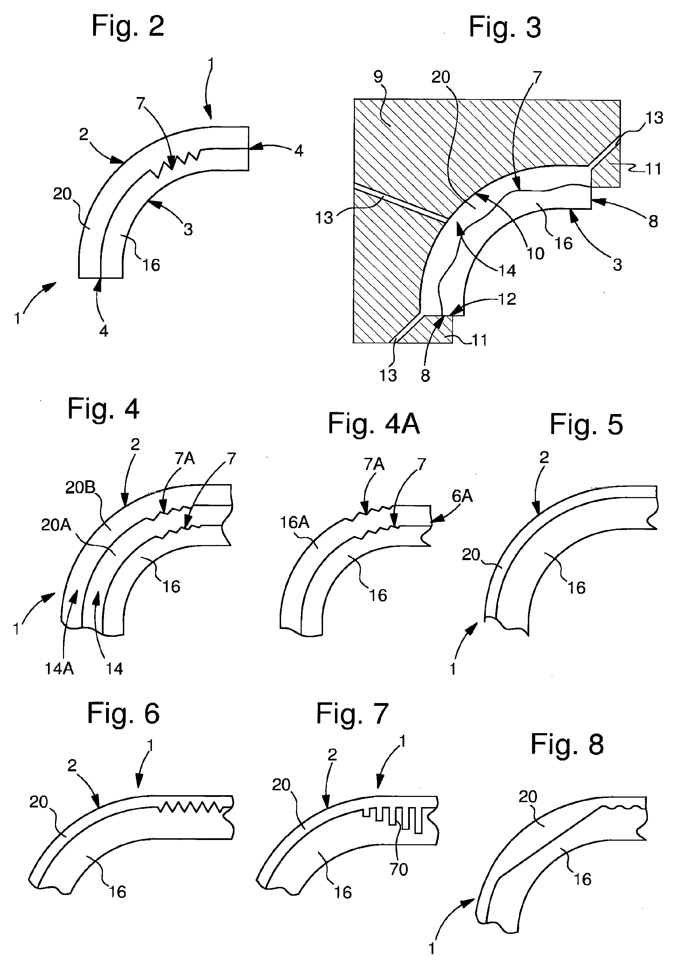

La figure 4 illustre une réalisation à plusieurs couches 20: une première couche 20A recouvre directement, totalement ou partiellement, un corps de base 16 pour former avec elle un corps intermédiaire 6A, tel que visible sur la figure 4A, et cette première couche 20A est elle-même recouverte, totalement ou partiellement, par une deuxième couche périphérique 20B. On comprend qu'il est possible de réalisé un composé avec un nombre de couches supérieur, sans s'éloigner de l'invention.

Dans le cas où la forme du composant 1 est tourmentée, on réalise dans au moins un tel moule 9 un réseau capillaire 13 d'injection et de dégazage, et on injecte le second matériau de moulage 6 au travers du réseau capillaire d'injection 13 dans le moule transparent 9 concerné, de façon à remplir entièrement du second matériau de moulage 6 une telle cavité 14 délimitée par la surface de contact 10 du moule transparent 9, la surface intermédiaire 7 du corps de base 16, et le rebord 11 en appui étanche par sa surface d'appui 12 sur la surface intermédiaire 7 ou sur le bord intermédiaire 8.

De façon à donner des propriétés physiques ou/et optiques particulières au composant 1, on réalise une structuration de fonctionnalisation. Dans la variante de la figure 6, on réalise une structuration de fonctionnalisation optique de la surface intermédiaire 7 par la réalisation de secteurs striés faisant diffuseur anisotrope optique.

Dans la variante de la figure 7, on réalise une structuration de fonctionnalisation mécanique de la surface intermédiaire 7, qui en soit ne fait pas partie de l'invention, par la réalisation de tenons 18 ou/et mortaises 17 sensiblement parallèles entre eux et sensiblement perpendiculaires à un plan tangent à la surface inférieure 3 ou à la surface intermédiaire 7 au niveau de l'intersection entre le prolongement des tenons ou mortaises avec la surface concernée.

Dans la variante de la figure 8, on réalise une structuration de fonctionnalisation mécanique de la surface intermédiaire 7, qui en soit ne fait pas partie de l'invention, par la réalisation de sections plus fortes du corps de base 16 dans ses zones de forte courbure que dans ses zones de moindre courbure, et on réalise des sections de couches 20 d'apport de sections plus fortes dans ses zones de forte courbure que dans ses zones de moindre courbure.

On réalise une structuration de fonctionnalisation mécanique de la surface intermédiaire 7, qui en soit ne fait pas partie de l'invention, par la réalisation de zones d'épaisseur variable du composant 1 dans ses zones de moindre courbure.

Le choix du matériau « Cover Form ® » permet le dépôt de couches 20 minces. De préférence, on recouvre le corps de base 16, pour parvenir au composant 1, avec une épaisseur cumulée de la ou des couches 20 dans le second matériau comprise entre 10 et 50 microns.

Avantageusement, quand on réalise un composé multi-couches, on effectue une structuration de fonctionnalisation de plusieurs des surfaces intermédiaires entre ces couches, tel que visible sur la figure 4, où les surfaces intermédiaires 7 et 7A sont ainsi structurées.

Dans une application particulière, on structure au moins une couche 20 particulière parmi celle ou celles recouvrant le corps de base 16, et au moins une surface intermédiaire 7, de façon à cacher ou à révéler la couche particulière, selon l'angle d'incidence optique d'observation du composant 1 par un utilisateur.

Une variante particulièrement intéressante d'inclusion à caractère technique pour les composants 1 destinés à faire partie d'un mouvement horloger consiste à ménager des poches ou des alvéoles quand on effectue la structuration de fonctionnalisation mécanique de la surface intermédiaire 7, qui en soi ne fait pas partie de l'invention, comme par exemple les mortaises 70 de la figure 7, de façon à pouvoir y déposer des particules de propriétés particulières avant l'application de la couche supérieure. Les propriétés du matériau « Cover Form ® » à l'état liquide avant sa polymérisation permettent de jouer sur sa capillarité, lorsqu'il est mélangé avec de telles particules, pour les déposer au fond de telles mortaises ou similaire. Un dimensionnement très serré de ces mortaises, stries, alvéoles, poches ou similaires, et voisin de la granulométrie des particules, permet de retenir des particules de faible granulométrie pendant l'injection du produit liquide destiné à former la couche suivante, dans une position parfaitement définie.

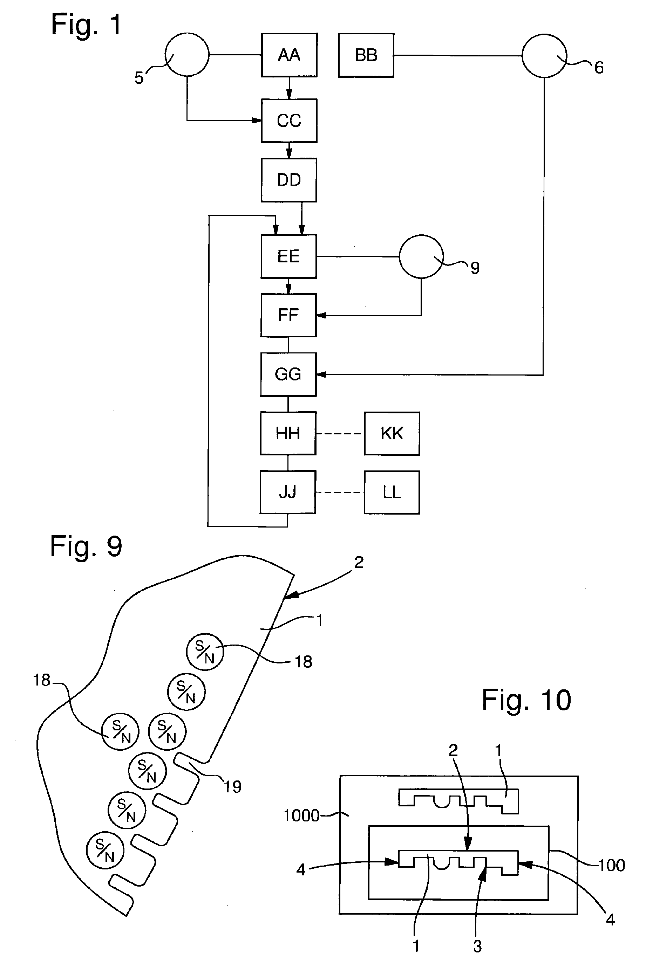

Tout particulièrement, le choix de l'insertion de particules électrisées ou électrisables, ou/et aimantées ou aimantables, permet de conférer au composant 1 ainsi réalisé des propriétés physiques particulières d'attraction ou/et de répulsion avec d'autres composants d'un mouvement d'horlogerie, de propriétés complémentaires selon l'effet recherché. La figure 9 illustre ainsi une réalisation particulière, dans laquelle on insère dans la cavité 17 formant moule, soit avant l'injection du premier matériau de moulage 5, soit pendant ou après cette injection, des nodules 18 comportant chacun un noyau électrisable ou/et magnétisable ou/et électrisé ou/et magnétisé, notamment de type électrets, ferrites, aimants néodyme, ou similaires. L'électrisation ou l'aimantation peut être préalable ou postérieure à l'injection. La figure 6 illustre par exemple des particules aimantées après la polymérisation complète du premier matériau de moulage 5, notamment du «Cover Form ®». Cette figure 6 illustre aussi, dans une zone de la surface supérieure 2, des alvéoles 19 agencées pour la lubrification. La surface de contact 7 de la plaque 6 est alors aménagée en conséquence.

Dans une autre variante, un matériau lubrifiant est mélangé au premier matériau de moulage 5, de façon analogue aux nodules 18 ci-dessus.

Ce procédé peut-être appliqué à un composant d'horlogerie 1 choisi parmi : glace, couronne, carrure, platine, pont, roue, roue d'échappement, ancre, logement de palier, amortisseur anti-choc, cette liste n'étant nullement limitative.

Le choix d'une couche mince 20 en «Cover Forme ® » sur un corps de base 16 en PMMA garantit une première réaction physico-chimique de diffusion au niveau de l'interface à la surface intermédiaire 7. La mise en oeuvre du produit «Cover Form ® », qui est un bi-composant mélangé en phase liquide permet d'occuper toutes les porosités, tant de la surface intermédiaire 7, que du moule. Ceci explique à la fois les états de surface parfaits obtenus, bien entendu dans la limite de la qualité des moules utilisés, que la transparence du composant 1 obtenu : en l'absence de colorant, la surface de joint est invisible, et il est impossible de déceler à l'oeil nu la limite entre les différents matériaux. Le «Cover Form ® » se prête à la coloration, ce qui autorise la fabrication de composants présentant des décors particuliers, y compris multicolores et dans leur épaisseur. La réalisation d'hologrammes est également possible.

L'invention permet d'obtenir des composants d'une grande transparence, d'une dureté superficielle supérieure à celle des matières plastiques moulées usuelles, de dureté durable. Le comportement aux rayures est très bon. En utilisant comme premier matériau de moulage 5 du «Cover Form ® », avec une chauffe inférieure à 130°C et un durcissement UV, on obtient une dureté, qui, classée sur l'échelle des mines graphites d'écriture est au niveau 7H, à comparer avec une dureté 2H d'un PMMA standard ayant reçu un traitement anti-rayures, ou encore avec une dureté HB d'un polyamide.

On comprend que le procédé décrit en détail ci-dessus est un exemple représentatif d'une famille de procédés que l'utilisateur met en oeuvre en fonction des moyens de production qu'il utilise.

En particulier, dans un procédé automatisé, on peut avantageusement :
- fermer l'outil de façon à définir un premier volume de chambre ;
- y injecter le premier matériau 5 ;
- le faire refroidir ;
- rouvrir partiellement le moule, de façon à créer une deuxième chambre de volume supérieur à celui du premier volume, la différence entre ces volumes correspondant au volume d'une première couche 20A de second matériau 6 ;
- injecter ce second matériau 6 ;
- procéder à une chauffe de durcissement ;
- procéder à une insolation UV de durcissement complémentaire ;
- refroidir le composé ;
- renouveler l'opération autant de fois qu'il y a de couches à superposer avec le même profil de moule.

On peut bien sûr au cours du processus changer de contre-moule afin de modifier la géométrie du composant réalisé.

La facilité de mise en oeuvre du procédé selon l'invention permet aussi, sur un même composant de délimiter des zones recouvertes de second matériau 6, et d'autres qui en sont dépourvues, de façon, selon les matériaux choisis, à faciliter la mise en oeuvre d'autres procédés tels que soudage laser ou ultra-sons, ou similaires, qui peuvent être réalisés dans une meilleure qualité sur certains matériaux.

Enfin, le cycle de production selon l'invention, est extrêmement rapide : pour la fabrication d'un composant avec une couche unique de revêtement, le nombre d'opérations à réaliser au niveau du poste d'injection est de 4, à comparer aux 14 opérations nécessaires pour la réalisation d'un composant similaire dans un matériau classique recouvert d'un revêtement anti-rayures.

Un mouvement d'horlogerie 100 peut comporter au moins un composant 1 réalisé selon ce procédé.

Une pièce d'horlogerie 1000 peut comporter au moins un composant 1 réalisé selon ce procédé

## Revendications

1. Procédé de fabrication et de fonctionnalisation optique d'un composant d'horlogerie (1) transparent optiquement et comportant une surface supérieure (2) et une surface inférieure (3) reliées par un bord (4), ledit bord (4) s'étendant selon l'épaisseur dudit composant (1), **caractérisé en ce que** :
- on choisit un premier matériau (5) transparent optiquement et polymérisable parmi le PMMA ou polymétacrylate, ou un polyacryl;
- on choisit au moins un second matériau de moulage (6) polymérisable pour la réalisation d'au moins une couche (20) dudit composant (1), et ledit second matériau de moulage (6) étant un mélange de phases liquides, base et activateur, et possédant, dans sa phase liquide une très bonne mouillabilité lui permettant d'occuper toutes les porosités, fentes, creux et reliefs superficiels d'un corps de base avec lequel il est mis en contact, et ledit second matériau de moulage (6) étant encore choisi de façon à ce que, après polymérisation, et après un traitement de chauffe (KK) à une température inférieure à 130°C, voisine de 110°C, et après un traitement d'insolation (LL) aux rayons ultra-violets effectué après ladite chauffe (KK), ledit second matériau de moulage (6) présente une excellente dureté superficielle, et une excellente résistance aux rayures, aux chocs, et à l'abrasion, grâce la réticulation définitive du système achevée par ladite insolation (LL) ;
- on effectue un formage d'un corps de base (16) dudit composant (1), dans ledit premier matériau (5), ledit corps de base (16) de volume inférieur à celui dudit composant (1) et s'étendant entre ladite surface inférieure (3) et une surface intermédiaire (7) reliées par un bord intermédiaire (8), et on effectue une structuration de fonctionnalisation optique de ladite surface intermédiaire (7) par la réalisation de secteurs striés faisant diffuseur anisotrope optique, soit lors du formage dudit corps de base (16) dans un moule adapté, soit en reprise d'usinage après ledit formage ;
- on définit un nombre de couches (20) à superposer audit corps de base (16) pour obtenir un dit composant (1) ;
- on réalise, pour chaque dite couche (20), un moule (9) transparent aux rayons-ultra-violets et dont une surface de contact (10) est, ou bien le négatif de ladite surface supérieure (2), ou bien une surface délimitant un solide de volume inférieur au volume final dudit composant (1), ledit moule (9) comportant un rebord (11) comportant une surface d'appui (12) agencée pour coopérer de façon complémentaire en appui sur ladite surface intermédiaire (7) ou sur ledit bord intermédiaire (8), et, en cas de pluralité de dits moules (9), ceux-ci définissent chacun le volume extérieur d'un corps intermédiaire (6A) délimité par une surface intermédiaire (7A) complémentaire de ladite surface de contact (10) dudit moule (9) concerné, lesdits volumes intermédiaires (6A) étant inclus les uns dans les autres;
- on positionne, à une distance de ladite surface intermédiaire (7) correspondant à l'épaisseur requise pour ledit composant (1), et exactement positionné par rapport à ladite surface intermédiaire (7), ledit moule (9) avec sa dite surface de contact (10) faisant face à ladite surface intermédiaire (7) dudit corps de base (16), avec ladite surface d'appui (12) en contact étanche avec ladite surface intermédiaire (7) ou avec ledit bord intermédiaire (8);
- on injecte ledit second matériau de moulage (6), de façon à remplir entièrement dudit second matériau de moulage (6) une cavité (14) délimitée par ladite surface de contact (10) dudit moule (9), ladite surface intermédiaire (7) dudit corps de base (16), et ledit rebord (11) en appui étanche par sa dite surface d'appui (12) sur ladite surface intermédiaire (7) ou sur ledit bord intermédiaire (8);
- on laisse se polymériser ledit second matériau (6) injecté dans ladite cavité (14) jusqu'à sa polymérisation, pour obtenir, selon le cas, ou bien un dit composant (1) constitué par l'assemblage dudit corps de base (16) avec au moins ladite couche (20), ou bien un corps intermédiaire (16A) délimité par une surface intermédiaire (7A) complémentaire de ladite surface de contact (10) dudit moule (9);
- on éloigne ledit moule (9) ;
- on renouvelle l'opération de formation d'une couche (20) avec à chaque fois un nouveau moule (9) dont le volume intérieur est supérieur au volume dudit corps intermédiaire (16A) obtenu par ledit moule précédent, jusqu'à obtention dudit composant (1) dans son volume final.

2. Procédé selon la revendication 1, **caractérisé en ce qu'**on choisit un polymétacrylate comme dit premier matériau (5).

3. Procédé selon l'une des revendications précédentes, **caractérisé en ce qu'**on soumet ledit second matériau (6) injecté dans ladite cavité (14), pendant sa polymérisation, à une température comprise entre 100°C et 120°C, pendant 10 à 20 secondes.

4. Procédé selon l'une des revendications précédentes, **caractérisé en ce que**, après injection dudit second matériau de moulage (6), on insole ledit corps intermédiaire (6A) ou ledit composant (1) par un rayonnement ultra-violet, ou bien au travers dudit moule (9) réalisé sous forme d'un moule transparent aux rayons ultra-violets, ou bien après extraction dudit corps intermédiaire (6A) ou dudit composant (1) polymérisé de ladite cavité (14), pour obtenir une dureté améliorée dudit corps intermédiaire (16A) ou dudit composant (1) rigide.

5. Procédé selon la revendication précédente, **caractérisé en ce qu'**on choisit ledit premier matériau de moulage (5) transparent aux rayons ultra-violets, et **en ce qu'**on insole ledit corps intermédiaire (6A) ou ledit composant (1) par un rayonnement ultra-violet au travers dudit corps de base (16), en plus de ladite insolation au travers dudit moule transparent (9), pour obtenir une dureté améliorée dudit corps intermédiaire (16A) ou dudit composant (1) rigide.

6. Procédé selon l'une des revendications précédentes, **caractérisé en ce qu'**on applique une force de serrage sur ledit moule (9) et sur ledit corps de base (16) pendant l'injection dudit second matériau de moulage (6) dans ladite cavité (14), et pendant la polymérisation dudit second matériau de moulage (6) pour la réalisation dudit composant (1).

7. Procédé selon l'une des revendications précédentes, **caractérisé en ce qu'**on réalise ledit composant (1) avec ladite surface supérieure (2) plane, et qu'on réalise choisit ledit moule (9) transparent aux rayons ultra-violets avec au moins sa dite surface de contact (10) plane.

8. Procédé selon l'une des revendications précédentes, **caractérisé en ce qu'**on réalise dans au moins un dit moule (9) un réseau capillaire (13) d'injection et de dégazage, et on injecte ledit second matériau de moulage (6) au travers dudit réseau capillaire d'injection (13) dans le dit moule transparent (9) concerné, de façon à remplir entièrement dudit second matériau de moulage (6) une cavité (14) délimitée par ladite surface de contact (10) dudit moule transparent (9), ladite surface intermédiaire (7) dudit corps de base (16), et ledit rebord (11) en appui étanche par sa dite surface d'appui (12) sur ladite surface intermédiaire (7) ou sur ledit bord intermédiaire (8).

9. Procédé selon l'une des revendications précédentes, **caractérisé en ce qu'**on effectue l'injection dudit premier matériau de moulage (5) à une pression supérieure à 100 MPa.

10. Procédé selon l'une des revendications précédentes, **caractérisé en ce qu'**on réalise, en plus une structuration de fonctionnalisation mécanique de ladite surface intermédiaire (7) par la réalisation de tenons (18) ou/et mortaises (70) sensiblement parallèles entre eux et sensiblement perpendiculaires à un plan tangent à ladite surface inférieure (3) ou à ladite surface intermédiaire (7) au niveau de l'intersection entre le prolongement desdits tenons ou mortaises avec la surface concernée.

11. Procédé selon l'une des revendications précédentes, **caractérisé en ce qu'**on réalise, en plus une structuration de fonctionnalisation mécanique de ladite surface intermédiaire (7) par la réalisation de sections plus faibles dudit corps de base (16) dans ses zones de forte courbure que dans ses zones de moindre courbure, et on réalise des sections de couches (20) d'apport de sections plus fortes dans ses zones de forte courbure que dans ses zones de moindre courbure.

12. Procédé selon l'une des revendications précédentes, **caractérisé en ce qu'**on réalise, en plus une structuration de fonctionnalisation mécanique de ladite surface intermédiaire (7) par la réalisation de zones d'épaisseur variable dudit composant (1) dans ses zones de moindre courbure.

13. Procédé selon l'une des revendications précédentes, **caractérisé en ce qu'**on réalise, en plus une structuration de fonctionnalisation mécanique d'au moins une dite surface intermédiaire (7) pour ménager un relief avec des creux de dimension voisine de la granulométrie de particules électrisées ou électrisables, ou/et aimantées ou aimantables, qu'on y dépose mélangées avec dudit second matériau (6) à l'état liquide, avant l'application d'une couche supérieure en dit second matériau (6).

14. Procédé selon l'une des revendications précédentes, **caractérisé en ce qu'**on recouvre ledit corps de base (16), pour parvenir audit composant (1), avec une épaisseur cumulée de matériau de ladite ou desdites couches comprise entre 10 et 50 microns.

15. Procédé selon l'une des revendications précédentes, **caractérisé en ce qu'**on structure au moins une couche (20) particulière parmi celle ou celles recouvrant ledit corps de base (16), et au moins une dite surface intermédiaire (7), de façon à cacher ou à révéler ladite couche (20) particulière, selon l'angle d'incidence optique d'observation dudit composant (1) par un utilisateur.

## Patentansprüche

1. Verfahren zum Herstellen und zur optischen Funktionalisierung einer optisch transparenten Uhrenkomponente (1), die eine obere Oberfläche (2) und eine untere Oberfläche (3) aufweist, die durch einen Rand (4) verbunden sind, wobei sich der Rand (4) über eine Dicke der Komponente (1) erstreckt, **dadurch gekennzeichnet, dass**:
- ein erstes Material (5), das optisch transparent und polymerisierbar ist, aus PMMA oder Polymethacrylat oder einem Polyacryl gewählt wird;
- wenigstens ein zweites polymerisierbares Gießmaterial (6) für die Verwirklichung wenigstens einer Schicht (20) der Komponente (1) gewählt wird, wobei das zweite Gießmaterial (6) ein Gemisch aus flüssigen Basis- und Aktiviererphasen ist und in seiner flüssigen Phase eine sehr gute Benetzbarkeit besitzt, die ihm ermöglicht, sämtliche Porositäten, Schlitze, Hohlräume und Reliefs in der Oberfläche eines Basiskörpers, mit dem es in Kontakt gelangt, zu befüllen, und wobei das zweite Gießmaterial (6) außerdem in der Weise gewählt wird, dass das zweite Gießmaterial (6) nach der Polymerisation und nach einer Wärmebehandlung (KK) auf eine Temperatur unterhalb von 130 °C in der Umgebung von 110 °C und nach einer Bestrahlungsbearbeitung (LL) mit Ultraviolettstrahlung, die nach der Erwärmung (KK) ausgeführt wird, eine ausgezeichnete Oberflächenhärte und einen ausgezeichneten Widerstand gegenüber Kratzern, Stößen und Abrieb kraft der endgültigen Vernetzung des durch Bestrahlung (LL) fertig gestellten Systems aufweist;
- eine Formung eines Basiskörpers (16) der Komponente (1) in dem ersten Material (5) ausgeführt wird, wobei der Basiskörper (16) ein Volumen besitzt, das kleiner als jenes der Komponente (1) ist, und sich zwischen der unteren Fläche (3) und einer Zwischenfläche (7), die durch einen Zwischenrand (8) verbunden sind, erstreckt, und eine Strukturierung der optischen Funktionalisierung der Zwischenfläche (7) durch die Verwirklichung von mit Streifen versehenen Sektoren, die einen optisch anisotropen Diffusor bilden, entweder durch Formen des Basiskörpers (16) in einer geeigneten Form oder durch Wiederaufgreifen einer Bearbeitung nach dem Formen ausgeführt wird;
- eine Anzahl von Schichten (20) definiert wird, mit denen der Basiskörper (16) überlagert werden soll, um die Komponente (1) zu erhalten;
- für jede Schicht (20) eine Form (9) verwirklicht wird, die für Ultraviolettstrahlen durchlässig ist und deren Kontaktoberfläche (10) entweder das Negativ der oberen Fläche (2) oder eine Fläche, die einen Festkörper mit einem Volumen kleiner als das endgültige Volumen der Komponente (1) begrenzt, ist, wobei die Form (9) einen Rand (11) aufweist, der eine Abstützoberfläche (12) umfasst, die dafür ausgelegt ist, auf komplementäre Weise abstützend mit der Zwischenfläche (7) oder mit dem Zwischenrand (8) zusammenzuwirken, wobei im Fall mehrerer solcher Formen (9) diese jeweils das Außenvolumen eines Zwischenkörpers (6A) definieren, der durch eine Zwischenfläche (7A) begrenzt ist, die zu der Kontaktoberfläche (10) der betreffenden Form (9) komplementär ist, wobei die Zwischenvolumina (6A) ineinander enthalten sind;
- in einem Abstand von der Zwischenfläche (7), der der für die Komponente (1) geforderten Dicke entspricht, und exakt positioniert in Bezug auf die Zwischenfläche (7) die Form (9) so positioniert wird, dass ihre Kontaktfläche (10) der Zwischenfläche (7) des Basiskörpers (16) zugewandt ist, wobei die Abstützfläche (12) in dichtem Kontakt mit der Zwischenfläche (7) oder mit dem Zwischenrand (8) ist;
- das zweite Gießmaterial (6) in der Weise eingespritzt wird, dass das zweite Gießmaterial (6) einen Hohlraum (14), der durch die Kontaktfläche (10) der Form (9), die Zwischenfläche (7) des Basiskörpers (16) und den Rand (11), der sich mit seiner Abstützfläche (12) auf der Zwischenfläche (7) oder auf den Zwischenrand (8) dicht abstützt, begrenzt ist, vollständig füllt;
- ein Polymerisieren des zweiten Materials (6), das in den Hohlraum (14) eingespritzt worden ist, bis zu seiner Polymerisation zugelassen wird, um gegebenenfalls entweder eine Komponente (1), die durch Zusammenfügung des Basiskörpers (16) mit wenigstens einer Schicht (20) gebildet ist, oder einen Zwischenkörper (16A), der durch eine Zwischenfläche (7A) begrenzt ist, die zu der Kontaktfläche (10) der Form (9) komplementär ist, zu erhalten;
- die Form (9) entfernt wird;
- der Vorgang des Bildens einer Schicht (20) mit jeweils einer neuen Form (9), deren Innenvolumen größer als das Volumen des Zwischenkörpers (16A) ist, der durch die vorhergehende Form erhalten wird, erneut ausgeführt wird, bis die Komponente (1) mit ihrem endgültigen Volumen erhalten wird.

2. Verfahren nach Anspruch 1, **dadurch gekennzeichnet, dass** als das erste Material (5) ein Polymethacrylat gewählt wird.

3. Verfahren nach einem der vorhergehenden Ansprüche, **dadurch gekennzeichnet, dass** das zweite Material (6), das in den Hohlraum (14) eingespritzt wird, während seiner Polymerisation während 10 bis 20 Sekunden mit einer Temperatur von 100 °C bis 120 °C beaufschlagt wird.

4. Verfahren nach einem der vorhergehenden Ansprüche, **dadurch gekennzeichnet, dass** nach dem Einspritzen des zweiten Gießmaterials (6) der Zwischenkörper (6A) oder die Komponente (1) mit Ultraviolettstrahlung entweder durch die Form (9), die in Form einer für Ultraviolettstrahlen transparenten Form verwirklicht ist, oder nach der Entnahme des polymerisierten Zwischenkörpers (6A) oder der polymerisierten Komponente (1) aus dem Hohlraum (14) bestrahlt wird, um eine verbesserte Härte des starren Zwischenkörpers (16A) oder der starren Komponente (1) zu erhalten.

5. Verfahren nach dem vorhergehenden Anspruch, **dadurch gekennzeichnet, dass** das erste Gießmaterial (5), das für Ultraviolettstrahlen transparent ist, gewählt wird und dass der Zwischenkörper (6A) oder die Komponente (1) mit Ultraviolettstrahlung durch den Basiskörper (16) zusätzlich zu der Bestrahlung durch die transparente Form (9) bestrahlt wird, um eine verbesserte Härte des starren Zwischenkörpers (16A) oder der starren Komponente (1) zu erhalten.

6. Verfahren nach einem der vorhergehenden Ansprüche, **dadurch gekennzeichnet, dass** auf die Form (9) und auf den Basiskörper (16) während des Einspritzens des zweiten Gießmaterials (6) in den Hohlraum (14) und während der Polymerisation des zweiten Gießmaterials (6) für die Verwirklichung der Komponente (1) eine Klemmkraft ausgeübt wird.

7. Verfahren nach einem der vorhergehenden Ansprüche, **dadurch gekennzeichnet, dass** die Komponente (1) mit ebener oberer Fläche (2) verwirklicht wird und dass die für Ultraviolettstrahlen transparente Form (9) wenigstens mit der ebenen Kontaktfläche (10) gewählt und verwirklicht wird.

8. Verfahren nach einem der vorhergehenden Ansprüche, **dadurch gekennzeichnet, dass** in wenigstens einer Form (9) ein Kapillarnetz (13) zum Einspritzen und Entgasen verwirklicht wird und das zweite Gießmaterial (6) durch das Einspritzkapillarnetz (13) in die betreffende transparente Form (9) eingespritzt wird, derart, dass das zweite Gießmaterial (6) einen Hohlraum (14), der durch die Kontaktfläche (10) der transparenten Form (9), die Zwischenfläche (7) des Basiskörpers (16) und den Rand (11), der sich mit seiner Abstützfläche (12) auf der Zwischenfläche (7) oder auf dem Zwischenrand (8) dicht abstützt, begrenzt ist, vollständig gefüllt ist.

9. Verfahren nach einem der vorhergehenden Ansprüche, **dadurch gekennzeichnet, dass** das Einspritzen des ersten Gießmaterials (5) mit einem Druck von mehr als 100 MPa erfolgt.

10. Verfahren nach einem der vorhergehenden Ansprüche, **dadurch gekennzeichnet, dass** außerdem eine Strukturierung einer mechanischen Funktionalisierung der Zwischenoberfläche (7) durch Verwirklichen von Zapfen (18) und/oder Zapfenlöchern (70), die zueinander im Wesentlichen parallel sind und zu einer Ebene, die zu der unteren Fläche (3) oder der Zwischenfläche (7) auf Höhe des Schnitts zwischen der Verlängerung der Zapfen oder Zapfenlöcher mit der betreffenden Oberfläche im Wesentlichen tangential ist, senkrecht sind, verwirklicht wird.

11. Verfahren nach einem der vorhergehenden Ansprüche, **dadurch gekennzeichnet, dass** außerdem eine Strukturierung einer mechanischen Funktionalisierung der Zwischenfläche (7) durch Verwirklichen von schwächeren Abschnitten des Basiskörpers (16) in Zonen mit starker Krümmung als in Zonen mit geringerer Krümmung verwirklicht wird und dass Schichtabschnitte (20) mit einer Ablagerung stärkerer Abschnitte in den Zonen mit größerer Krümmung als in den Zonen mit schwächerer Krümmung verwirklicht werden.

12. Verfahren nach einem der vorhergehenden Ansprüche, **dadurch gekennzeichnet, dass** außerdem eine Strukturierung einer mechanischen Funktionalisierung der Zwischenfläche (7) durch die Verwirklichung von Zonen mit veränderlicher Dicke der Komponente (1) in den Zonen mit geringerer Krümmung verwirklicht wird.

13. Verfahren nach einem der vorhergehenden Ansprüche, **dadurch gekennzeichnet, dass** außerdem eine Strukturierung einer mechanischen Funktionalisierung wenigstens einer Zwischenfläche (7) verwirklicht wird, um ein Relief mit Hohlräumen mit einer Abmessung in der Nähe der Granulometrie der elektrisierten oder elektrisierbaren und/oder magnetisierten oder magnetisierbaren Partikel, die hier vermischt mit dem zweiten Material (6) in flüssigem Zustand vor der Aufbringung einer oberen Schicht aus dem zweiten aterial (6) abgelagert werden, zu bilden.

14. Verfahren nach einem der vorhergehenden Ansprüche, **dadurch gekennzeichnet, dass** der Basiskörper (16) abgedeckt wird, um die Komponente (1) mit einer kumulierten Materialdicke der einen oder der mehreren Schichten im Bereich von 10 bis 50 Mikrometern zu erhalten.

15. Verfahren nach einem der vorhergehenden Ansprüche, **dadurch gekennzeichnet, dass** wenigstens eine besondere Schicht (20) unter jener oder jenen, die den Basiskörper (16) abdecken, und wenigstens eine Zwischenfläche (7) strukturiert werden, derart, dass die besondere Schicht (20) unter dem eobachtungs-Lichtauftre inkel der Komponente (1) des Anwenders verdeckt oder aufgedeckt wird.

## Claims

1. Method of fabricating and optically functionalising an optically transparent timepiece component (1) including a top surface (2) and a bottom surface (3) connected by an edge (4), said edge (4) extending over the thickness of said component (1), **characterized in that**:
- a first optically transparent polymerisable material (5) is selected from among PMMA or polymethacrylate, or a polyacryl;
- at least a second polymerisable moulding material (6) is selected for forming at least one layer (20) of said component (1), said second moulding material (6) being a mixture of liquid phases, base and activator, and exhibiting, in the liquid phase, very good wettability enabling the material to occupy all the surface porosities, slits, hollows and reliefs of a basic body placed in contact with said material, and said second moulding material (6) also being selected so that, after polymerisation, and after a heat treatment (KK) at a temperature of less than 130°C, close to 110°C, and after an ultraviolet radiation insulation treatment (LL) performed after said heat treatment (KK), said second moulding material (6) has excellent surface hardness, and excellent resistance to scratches, shocks and abrasion, as a result of the permanent reticulation of the system completed by said insulation (LL);
- a basic body (16) of said component (1) is shaped in said first material (5), said basic body (16) having a smaller volume than that of said component (1) and extending between said bottom surface (3) and an intermediate surface (7) connected by an intermediate edge (8), and said intermediate surface (7) is structured for optical functionalisation by making striated sections forming an optical anisotropic diffuser, either when said basic body (16) is shaped in a suitable mould, or in a re-machining operation after said shaping;
- a number of layers (20) to be superposed on said basic body (16) is defined to obtain a said component (1);
- for each said layer (20) there is made an ultraviolet transparent mould (9) having a contact surface (10) which is either the negative of said top surface (2), or a surface delimiting a solid of smaller volume than the final volume of said component (1), said mould (9) including an edge (11) comprising a bearing surface (12) arranged to cooperate in a complementary manner in abutment on said intermediate surface (7) or on said intermediate edge (8), and, in the case of a plurality of said moulds (9), each mould defines the external volume of an intermediate body (6A) delimited by a complementary intermediate surface (7A) of said contact surface (10) of said mould (9) concerned, said intermediate volumes (6A) being incorporated in each other;
- said mould (9) is positioned at a distance from said intermediate surface (7) equal to the thickness required for said component (1), exactly in position relative to said intermediate surface (7), with said contact surface (10) of said mould facing said intermediate surface (7) of said basic body (16), with said bearing surface (12) in sealed contact with said intermediate surface (7) or with said intermediate edge (8);
- said second moulding material (6) is injected so as to entirely fill with said second moulding material a cavity (14) delimited by said contact surface (10) of said mould (9), said intermediate surface (7) of said basic body (16), and said edge (11) in sealed abutment via said bearing surface (12) on said intermediate surface (7) or on said intermediate edge (8);
- said second material (6) injected into said cavity (14) is left to polymerise until polymerisation, to obtain, depending on the case, either one said component (1) formed by the assembly of said basic body (16) with at least said layer (20), or an intermediate body (16A) delimited by a complementary intermediate surface (7A) of said contact surface (10) of said mould (9);
- said mould (9) is moved away;
- the operation of forming a layer (20) is repeated each time with a new mould (9) whose internal volume is larger than the volume of said intermediate body (16A) obtained from said preceding mould, until the final volume of said component (1) is obtained.

2. Method according to claim 1, **characterized in that** a polymethacrylate is selected as said first material (5).

3. Method according to any of the preceding claims, **characterized in that** said second material (6) injected into said cavity (14) is subjected, during polymerisation, to a temperature of between 100°C and 120°C for 10 to 20 seconds.

4. Method according to any of the preceding claims, **characterized in that**, after injection of said second moulding material (6), said intermediate body (6A) or said component (1) are ultraviolet radiation insulated, either through said mould (9) made in the form of an ultraviolet radiation transparent mould, or after the removal of said intermediate body (6A) or of said polymerised component (1) from said cavity (14), to obtain improved hardness of said intermediate body (16A) or of said rigid component (1).

5. Method according to the preceding claim, **characterized in that** said first moulding material (5) is selected to be ultraviolet radiation transparent, and **in that** said intermediate body (6A) or said component (1) is ultraviolet radiation insulated through said basic body (16), in addition to said insulation through said transparent mould (9), to obtain improved hardness of said intermediate body (16A) or of said rigid component (1).

6. Method according to any of the preceding claims, **characterized in that** a tightening force is applied to said mould (9) and to said basic body (16) during injection of said second moulding material (6) into said cavity (14), and during polymerisation of said second moulding material (6) to form said component (1).

7. Method according to any of the preceding claims, **characterized in that** said component (1) is made with said top surface (2) flat, and said ultraviolet radiation transparent mould (9) is made with at least said contact surface (10) flat.

8. Method according to any of the preceding claims, **characterized in that** an injection and degassing capillary network (13) is made in at least one said mould (9) and said second moulding material (6) is injected into said transparent mould concerned (9) via said injection capillary network (13), so as to entirely fill with said second moulding material (6) a cavity (14) delimited by said contact surface (10) of said transparent mould (9), said intermediate surface (7) of said basic body (16), and said edge (11) in sealed abutment via said bearing surface (12) on said intermediate surface (7) or on said intermediate edge (8).

9. Method according to any of the preceding claims, **characterized in that** the injection of said first moulding material (5) is performed at a pressure or more than 100 MPa.

10. Method according to any of the preceding claims, **characterized in that** said intermediate surface (7) is also structured for mechanical functionalisation by forming tenons (18) and/or mortices (70) substantially parallel to each other and substantially perpendicular to a plane tangential to said bottom surface (3) or to said intermediate surface (7) at the intersection between the extension of said tenons or mortises and the surface concerned.

11. Method according to any of the preceding claims, **characterized in that** said intermediate surface (7) is also structured for mechanical functionalisation by making smaller sections of said basic body (16) in the areas of strong curvature than in the areas of lower curvature, and sections of additional layers (20) having a larger section are made in the areas of strong curvature than in areas of low curvature.

12. Method according to any of the preceding claims, characterized said intermediate surface (7) is also structured for mechanical functionalisation by forming areas of variable thickness of said component (1) in the areas of lower curvature.

13. Method according to any of the preceding claims, **characterized in that** at least one said intermediate surface (7) is also structured for mechanical functionalisation to arrange a relief with hollows of dimensions close to the particle size of electrized or electrizable and/or magnetised or magnetisable particles which are deposited, mixed with said second material (6) in the liquid state, prior to application of a top layer of said second material (6).

14. Method according to any of the preceding claims, **characterized in that** said basic body (16) is coated to produce said component (1) with a combined thickness of material of said layer or layers of between 10 and 50 microns.

15. Method according to any of the preceding claims, **characterized in that** at least one particular layer (20) among the layer(s) coating said basic body (16) and at least one said intermediate surface (7) are structured, so as to conceal or reveal said particular layer (20), according to the angle of incidence of optical observation of said component by a user.
